# FASCICULE DE BREVET EUROPEEN

(11) **EP 1 894 460 B1**
(45) Date de publication et mention de la délivrance du brevet: **23.12.2009**
(21) Numéro de dépôt: 07114031.3
(22) Date de dépôt: 08.08.2007
(51) Int. Cl.: A01D 34/81, A01D 34/71

(54) **Equipement mobile de coupe de vegetaux et carter correspondant**
Mobile Ausrüstung zum Schneiden von Pflanzen und entsprechendes Gehäuse
Mobile equipment for cutting vegetables and corresponding case

(30) Priorité: 31.08.2006 FR 0607662
(43) Date de publication de la demande: 05.03.2008
(73) Titulaire: KIVA, 39570 Courbouzon (FR)
(72) Inventeur: Willien, Nicolas, 39230, Sellieres (FR); Doney, Christophe, 71580, Beaurepaire en Bresse (FR)
(74) Mandataire: Bioret, Ludovic

(56) Documents cités:
- EP-A- 0 966 877
- EP-A1- 1 541 007
- DE-U1-202004 015 376
- FR-A1- 2 315 836

## Description

### 1. Domaine de l'invention

Le domaine de l'invention est celui des équipements mobiles de coupe de végétaux, tels que l'herbe, les plantes fourragères, les céréales... L'invention concerne plus précisément de tels équipements à éléments de coupe rotatifs, tel que décrit dans le document EP-A-1541007.

L'invention concerne en particulier les équipements de fauchage, c'est-à-dire, indépendamment leur dénomination (faucheuse, motofaucheuse, tondeuse ou débroussailleuse...), les équipements permettant d'effectuer une coupe nette de végétaux destinés à produire du fourrage, sans les broyer.

### 2. Solutions de l'art antérieur

On connaît de nombreuses solutions d'équipements mobiles de fauchage de végétaux. De tels équipements peuvent par exemple être attelés sur un tracteur agricole, auquel cas ils peuvent être montés à l'avant, à l'arrière, ou sur l'un des cotés de ce tracteur. Il existe également de tels équipements conçus pour être pilotés par un conducteur marchant. On connaît par exemple des tondeuses, ou des motofaucheuses à conducteur marchant.

Ces équipements de fauchage de végétaux sont destinés à effectuer une coupe franche des végétaux, et notamment de l'herbe, sans les broyer. Les végétaux ainsi coupés peuvent être utilisés comme fourrage, notamment pour l'alimentation des animaux. Parmi ces équipements, on distingue notamment des faucheuses à barre de coupe rectiligne, et des faucheuses à éléments de coupe rotatifs, ou faucheuses rotatives. La présente invention ne concerne que les équipements de fauchage à éléments de coupe rotatifs.

Les faucheuses rotatives peuvent comporter des éléments de coupe tournant autour d'un seul axe ou de plusieurs axes disposés le long d'un bâti. Certaines faucheuses comportent ainsi plusieurs éléments rotatifs. Dans ce cas, deux éléments rotatifs voisins tournent en sens inverse. Des volets montés sur ces éléments rotatifs créent un courrant d'air qui aide à évacuer les végétaux coupés entre ces éléments rotatifs, ce qui permet de réaliser un andain.

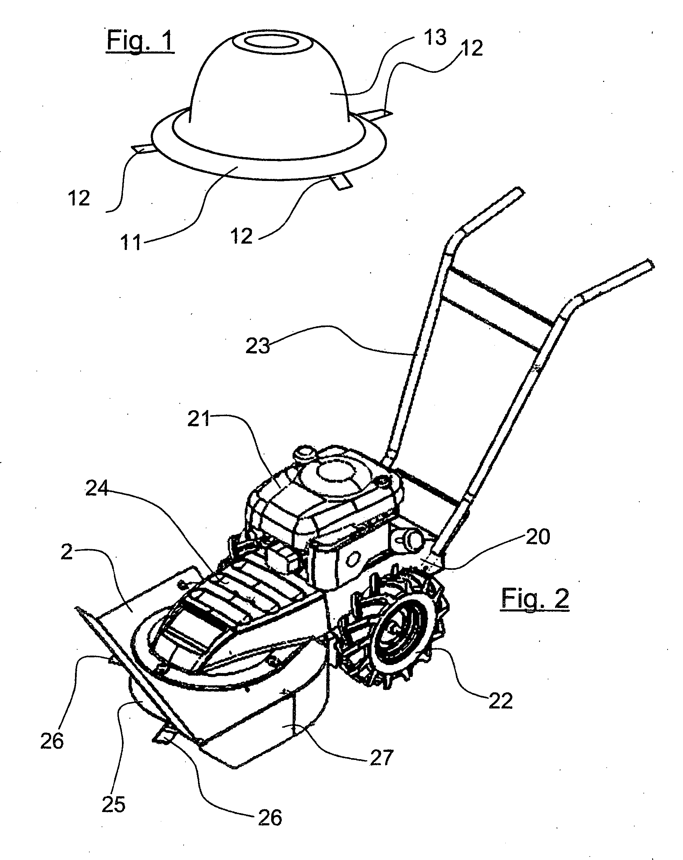

D'autres modèles de faucheuses ne comportent qu'un seul élément rotatif. Dans ces machines, les végétaux coupés doivent pouvoir être évacués pour ne pas être broyés par les éléments de coupe. La figure 1 représente un exemple d'élément rotatif d'une telle faucheuse dite mono-disque.

Cet élément rotatif comprend un disque 11, ou plateaux à lame, en périphérie duquel sont montées les lames de coupe 12, également appelées couteaux. La partie supérieure de ce plateau à lame est équipée d'un bol 13 en tôle emboutie de forme concave. Ce bol est solidaire du disque 11 et, en tournant, il permet l'éjection latérale sur un côté des végétaux coupés. Il favorise ainsi l'andainage de ceux-ci, c'est-à-dire leur disposition en andain. Les andains, qui sont des amas de végétaux disposés en rangées, peuvent par la suite être facilement ramassés.

A cause de la présence de ce bol 13 sur le dessus des plateaux à lames, et pour permettre l'éjection latérale des végétaux, il est nécessaire que l'entraînement en rotation de ce plateau à lame soit fait par le dessous, par exemple par l'intermédiaire d'une courroie. Un tel entraînement, qui doit être assuré dans un espace faible pour que les lames puissent être les plus proche possible du sol, est assez complexe à mettre en oeuvre et coûte relativement cher à fabriquer.

De telles faucheuses sont généralement dépourvues de carter rigide au-dessus des éléments de coupe. En effet un tel carter aurait pour effet de maintenir les végétaux coupés à proximité des éléments de coupe, ce qui entraînerait leur broyage. Ces faucheuses ne comportent donc généralement qu'une protection formée d'une toile tendue au-dessus des lames. De telles protections ne permettent que difficilement d'assurer la sécurité de l'utilisateur.

### 3. Objectifs de l'invention

L'invention a notamment pour objectif de pallier ces inconvénients de l'art antérieur.

Plus précisément, un objectif de l'invention est de fournir un équipement mobile de fauchage de végétaux qui permette une bonne évacuation et un bon andainage des végétaux coupés.

Un autre objectif de l'invention est de fournir un tel équipement de fauchage qui permette une coupe franche des végétaux, sans broyage de ceux-ci, de façon à ce qu'ils puissent être utilisés comme fourrage.

Encore un autre objectif de l'invention est de fournir un tel équipement de fauchage qui soit particulièrement facile et peu coûteux à fabriquer.

Un objectif particulier de l'invention est de fournir un tel équipement de fauchage à éléments de coupe rotatifs pour lesquels l'entraînement des éléments de coupe est effectué par le dessus.

Un objectif supplémentaire de l'invention est de fournir un tel équipement de fauchage qui réponde aux exigences de sécurité pour l'utilisateur.

### 4. Exposé de l'invention

Ces objectifs, ainsi que d'autres qui apparaîtront par la suite, sont atteints à l'aide d'un équipement mobile de fauchage de végétaux, selon la revendication 1.

Un tel carter permet d'effectuer une coupe franche des végétaux et de les évacuer latéralement pour qu'ils soient andainés sans être broyés. En effet, il permet que les végétaux coupés ne passent pas sous le carter, mais glissent le long du bord avant pour tomber sur le côté de l'équipement. De plus, un tel carter peut être rigide et présente l'avantage de pouvoir supporter facilement le mécanisme de transmission de la faucheuse. Ce carter est alors plus solide et protège mieux l'utilisateur qu'une protection formée par une toile tendue.

Il est pour cela à noter que, selon l'invention, l'extrémité gauche du bord avant (vu par l'utilisateur poussant l'équipement) doit être en avant par rapport à l'extrémité gauche si les lames tournent dans le sens horaire (vu par l'utilisateur poussant l'équipement) (cas représenté par la figure 2). Inversement, l'extrémité droite du bord avant doit être en avant par rapport à l'extrémité droite si les lames tournent dans le sens anti-horaire. Le terme « avant » doit bien entendu se comprendre en fonction de la direction et du sens d'avancement normal de l'équipement quand il est utiliser pour le fauchage de végétaux.

Préférentiellement, le bord avant du carter se prolonge par au moins un élément de front s'étendant sensiblement vers le haut, et destiné à être en contact avec les végétaux à l'avant de l'équipement.

Cet élément de front permet de favoriser une coupe franche et une bonne évacuation des végétaux coupés. En effet, il favorise la glisse des végétaux coupés le long du bord avant du carter, sans qu'ils passent sous le carter.

Selon un mode de réalisation préférentiel, cet élément de front comporte une portion de forme sensiblement plane et inclinée sensiblement vers la direction d'avancement du dispositif de façon à former un angle α, ou angle d'inclinaison, compris entre 100° et 170° avec l'horizontale.

Cette orientation de la tôle de front permet d'obtenir de meilleurs résultats de coupe franche des végétaux.

Selon un autre mode de réalisation avantageux, l'élément de front comporte une portion présentant une section en arc de cercle, au voisinage du bord.

Cette solution présente l'avantage de réduire encore la surface de glissement entre les végétaux et l'élément de front, et ainsi de favoriser plus encore le glissement des végétaux coupés le long du bord avant du carter, et donc l'endainage de ces végétaux.

De façon avantageuse, l'élément de front est mobile en translation par rapport au carter, de façon à pouvoir prendre au moins deux positions d'utilisation.

La hauteur de l'élément de front par rapport au sol peut ainsi être ajustée pour donner de meilleurs résultats, notamment en fonction de la hauteur des végétaux à couper, ou de la nature ou la densité de ceux-ci.

Avantageusement, le carter porte un élément de front principal et au moins un élément de front secondaire, au moins un des éléments secondaires s'étendant le long du bord avant d'une portion du carter mobile dans un plan sensiblement horizontal.

Cette configuration permet de mieux adapter le carter aux différentes conditions d'utilisations et aux différents végétaux coupés.

Selon un choix judicieux, le carter comporte au moins une portion latérale mobile entre au moins deux positions.

Cette portion latérale permet notamment d'ajuster la position de l'andain formé, par rapport l'équipement de fauchage.

Préférentiellement, un élément de protection de lame est solidarisé à au moins un des bords latéraux du carter.

Les protections de lames permettent d'éviter les projections de pierres ou d'autres éléments par les lames en rotation.

De façon avantageuse, le carter comprend au moins une partie mobile en rotation par rapport à l'équipement de coupe, de façon à pouvoir prendre au moins deux positions angulaires dans un plan sensiblement horizontal.

Le principe de l'invention s'étend également à tout carter d'équipement mobile de fauchage de végétaux selon la revendication 10.

### 5. Liste des figures

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1, qui a été commentée ci-dessus, présente un exemple d'élément rotatif de faucheuse selon l'art antérieur ;
- la figure 2 présente une vue d'un équipement de coupe de végétaux selon un mode de réalisation de l'invention ;
- la figure 3 présente une variante de l'équipement de coupe de végétaux de la figure 2 ;
- la figure 4 est une vue en perspective du carter de l'équipement de coupe de végétaux de la figure 2 ;
- la figure 5 est une vue de dessus du carter de la figure 4 ;
- la figure 6 est une vue en coupe du carter de la figure 4 ;
- la figure 7 est une vue en coupe d'une variante du carter de la figure 4 ;
- la figure 8 est une vue en perspective d'une autre variante réglable du carter de la figure 4 ;
- la figure 9 est une vue de dessus du carter d'un équipement de fauchage de végétaux selon un second mode de réalisation de l'invention ;
- la figure 10 est une vue en perspective du carter de la figure 9 ;
- la figure 11 est une vue de dessus du carter d'un équipement de fauchage de végétaux selon un autre mode de réalisation de l'invention ;
- la figure 12 est une vue en perspective du carter de la figure 11.

### 6. Description détaillée de l'invention

### 6.1 Rappel du principe de l'invention

Le principe général de l'invention repose sur la forme asymétrique du carter situé au-dessus de l'ensemble de coupe. Ce carter, grâce à son bord avant incliné et portant un élément de front lui-même incliné, permet d'effectuer en même temps une coupe franche des végétaux sans qu'ils soient broyés, et un dégagement latéral régulier de ceux-ci, qui forment alors un andain.

Les figures 2 à 11 illustrent trois exemples de mise en oeuvre de l'invention sur une faucheuse rotative à conducteur marchant. Bien évidemment, l'invention ne s'applique pas qu'à ce type d'équipement de coupe, mais peut également s'appliquer, par exemple, à des faucheuses attelées à des tracteurs agricoles, et plus généralement à tous les équipements mobiles permettant le fauchage de végétaux et comportant au moins un ensemble de coupe rotatif, indépendamment de la dénomination de ces équipements.

### 6.2 Faucheuse à carter non réglable

La figure 2 représente une faucheuse rotative à conducteur marchant selon un mode de réalisation de l'invention. De façon classique, cette faucheuse comprend un châssis 20, sur lequel sont montés un moteur 21, des roues 22 et un guidon 23 lui permettant d'être conduit par un conducteur marchant

La coupe des végétaux est assurée par des lames 26, qui sont montées en périphérie d'un disque 25, ou plateau à lames, qui est entraîné en rotation par le moteur 21.

A la différence de la majorité des faucheuses à disques rotatifs de l'art antérieur, le mécanisme d'entraînement est situé au-dessus du disque 25, sous un cache 24. Cet entraînement du plateau à lames par le dessus est possible dans la mesure ou le bol qui, dans l'art antérieur, est situé au-dessus du disque et assure l'évacuation latérale et l'andainage des végétaux n'est pas nécessaire dans la faucheuse selon l'invention.

En effet, dans la faucheuse représentée sur la figure 2, c'est le carter de protection 2, également appelé coupelle, ou coupole, qui assure la fonction de l'évacuation latérale de l'herbe et de son andainage, et qui en même temps favorise une coupe franche des végétaux, sans qu'ils soient broyés.

En effet, au fur et à mesure que les végétaux sont coupés par les lames 26, à l'avant de la faucheuse, ils glissent vers la droite de la faucheuse le long de la partie avant du carter, sans passer sous celui-ci. Ils viennent alors former un andain à la droite de la faucheuse.

Ce carter de protection 2, qui dispose pour cela d'une forme asymétrique très particulière, est donc une nouvelle solution technique réalisant la fonction d'andainage du bol 13 existant dans l'art antérieur.

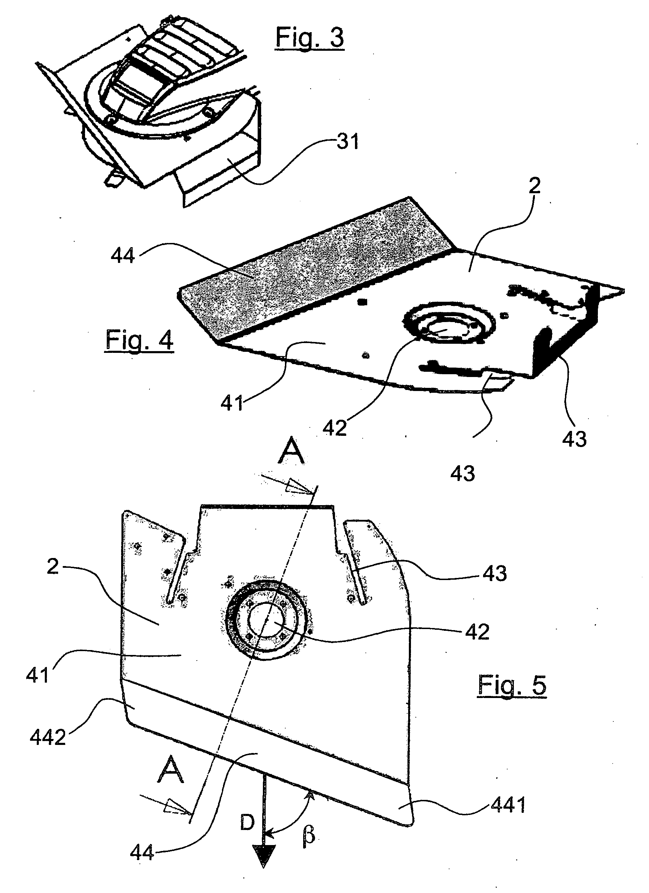

Le carter de protection 2 de cette faucheuse est représenté en détail sur les figures 4 à 6. Ce carter comprend une tôle horizontale 41, qui est destinée à être située au-dessus du disque 25. La partie arrière de cette tôle horizontale comporte des éléments 43 de fixation au châssis 20 de la faucheuse. Une ouverture circulaire 42, qui est destinée à permettre le passage du mécanisme de transmission pour permettre l'entraînement du disque 25, est ménagée au centre de cette tôle horizontale 41.

Le bord avant du carter 2 porte un élément de front 44, qui est destiné à être au contact des végétaux lors de la progression de la faucheuse. Cet élément de front 44 a, dans le présent mode de réalisation, sensiblement une forme de parallélogramme.

Comme le montre clairement la figure 5, l'élément de front 44 n'est pas, dans un plan horizontal, perpendiculaire à la direction d'avancement de la faucheuse, matérialisée par la flèche D. Au contraire, le bord avant du carter, qui porte cet élément de front, est orienté de façon à former, dans un plan horizontal un angle β avec cette direction d'avancement.

L'élément de front orienté selon un tel angle permet en effet d'assurer l'évacuation par le coté des végétaux coupés, ceux-ci glissant le long de l'élément de front depuis le côté « en avant » de l'élément de front, ici représenté par son extrémité 441, vers son côté « en arrière », ici représenté par l'extrémité 442.

Bien entendu, cet angle β peut être orienté tant dans le sens horaire que dans le sens anti-horaire, les côtés « en avant » et « en arrière » pouvant être respectivement les côtés gauche et droit de l'élément de front ou inversement. En tout état de cause, l'évacuation des végétaux et leur andainage s'effectuent du côté « en arrière » de l'élément de front.

Pour que l'évacuation des végétaux se fasse correctement dans la configuration de la figure 5, le disque 25 portant les lames tourne dans le sens horaire. En effet, les lames ont ainsi tendance à entraîner et à incliner les végétaux, par exemple les brins d'herbe, de façon à contribuer au dégagement régulier le long de l'élément de front et à favoriser la création d'un andain propre et régulier. La vitesse de rotation de ces lames est également un facteur important pour un bon résultat de la coupe et de l'andainage. A titre d'exemple, une vitesse de rotation de l'ordre de 2000 tours / minute peut donner de bons résultats. Cependant, cette vitesse pourra notamment être variable en fonction de la densité ou de la nature des végétaux coupés.

L'angle β représenté sur la figure 5 est d'environ 70°. Cette valeur de 70° (+/-10°) permet d'obtenir de bons résultats de fauchage, d'évacuation et d'andainage des végétaux. De plus, elle permet de garder facilement un carter recouvrant totalement les lames, ce qui est généralement demandé par les normes de sécurité.

Cependant, d'autres valeurs d'angle peuvent permettre d'obtenir un bon résultat, par exemple pour le fauchage de végétaux d'un autre type ou d'une autre densité. Ainsi, il est possible de mettre en oeuvre un angle β compris entre 40° et 80° sans sortir du champ de la présente invention. Les autres angles β mentionnés dans les autres modes de réalisation de l'invention sont également compris entre 40 et 80°.

L' angle β apportant une évacuation et un andainage optimal des végétaux n'est pas nécessairement identique pour tous les végétaux. Ainsi, il pourra notamment être variable en fonction de la densité de ces végétaux.

Il est à noter que la présence de l'élément de front n'est pas indispensable pour la mise en oeuvre de l'invention. En effet, le bord avant du carter peut, en l'absence de élément de front, assurer le même rôle si il est orientée de façon à former, dans un plan horizontal, un tel angle β avec la direction d'avancement.

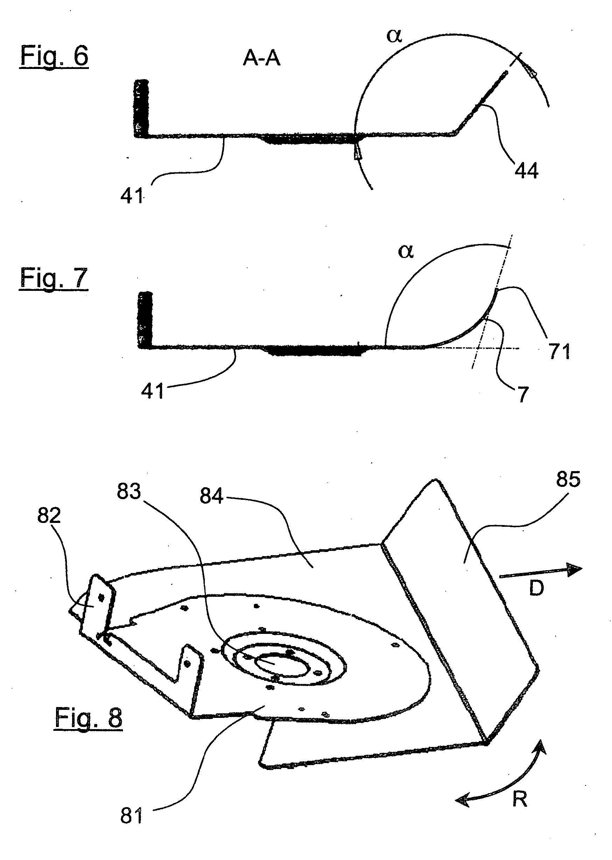

La figure 6 montre une vue en coupe du carter 41, selon un plan perpendiculaire au bord de l'élément de front. On peut voir sur cette figure que l'élément de front 44 forme un angle α avec la tôle horizontale 41. L'élément de front incliné de cet angle α par rapport à l'horizontale est donc penché vers l'avant de la machine, dans une direction proche de la direction d'avancement de la faucheuse.

L'élément de front ainsi orienté à pour effet, lors de la coupe de végétaux, de plier ces végétaux qui sont alors coupés de façon franche, sans être broyés. Il facilite également l'évacuation et l'andainage des végétaux, car il limite la surface de frottement entre les végétaux à couper et le carter ; ainsi on peut estimer que, le frottement étant diminué, les végétaux glissent plus facilement contre le carter et sont alors mieux évacués sur le côté et andainés.

L'angle α représenté sur la figure 6 est d'environ 130° (+/- 10°), qui permet d'obtenir de bons résultats, mais d'autres valeurs d'angle peuvent permettre d'obtenir le même résultat. Ainsi, il est possible de mettre en oeuvre un angle α compris entre 100° et 170° sans sortir du champ de la présente invention.

L'angle α apportant une coupe optimale des végétaux n'est pas nécessairement identique pour tous les végétaux. Ainsi, il pourra notamment être variable en fonction de la hauteur, la nature et la densité de ces végétaux.

Les éléments de front présentés dans les autres modes de réalisation de la présente invention peuvent avantageusement présenter cette même orientation selon un angle α compris entre 100° et 170°.

L'orientation de l'élément de front suivant l'angle α favorise une coupe franche des végétaux et l'orientation de l'élément de front suivant l'angle β favorise l'évacuation latérale pour l'andainage de ces végétaux. Chacune de ces orientations de l'élément de front pourrait être mise en oeuvre indépendamment de l'autre et pourrait permettre d'obtenir un résultat, soit de coupe franche, soit d'évacuation latérale. Il est cependant important de noter que ces deux orientations présentent une synergie ayant pour effet d'obtenir un fauchage parfait des végétaux.

En effet, une coupe franche est inutile si le végétal n'est pas évacué après la coupe. En effet, si il reste sur place, il risque d'être broyé par les lames lors de l'avancement de la faucheuse. De même, comme il est indiqué ci-dessus, l'évacuation latérale le long de l'élément de front est rendue plus efficace par l'orientation de l'élément de front suivant l'angle α.

La figure 7 présente une vue en coupe d'un carter similaire au carter de la figure 4, selon un plan perpendiculaire au bord de l'élément de front. On peut voir sur cette figure que l'élément de front 7 est de forme courbée. Son extrémité 71 est cependant orientée de façon à ce que sa tangente forme un angle α compris entre 100° et 170° avec la tôle horizontale 41.

Un tel élément de front courbé a le même effet que l'élément de front droit représenté sur les figures 4 à 6, et peut donc être utilisé comme une alternative à celui-ci dans tous les modes de réalisation, sans sortir du champ de la présente invention. De plus, l'arrondi diminue la surface de contact de l'élément de front avec les végétaux, ce qui favorise le glissement et ainsi le dégagement de ceux-ci.

Il est également possible de prévoir un élément de front qui porterait une partie de forme courbée et une partie droite, sans plus sortir du champ de la présente invention.

Le carter de la faucheuse représenté sur la figure 2 est équipé, sur un de ses côtés, d'une protection de lame 27 destinée notamment à éviter les projections de pierres ou autres éléments par les lames en rotation.

La protection de lame est bien entendu montée sur le côté du carter opposé à celui par lequel se fait l'évacuation des végétaux. Celle représentée sur la figure 2 est une tôle verticale fixée au bord latéral du carter. La figure 3 représente l'avant d'une faucheuse équipée d'une protection de lame 31 légèrement différente, qui comporte une partie inclinée puis une partie horizontale. Ces deux modèles de protection de lame ont cependant sensiblement les mêmes effets.

### 6.3 Faucheuse à carter réglable

### Réglage de l'angle β

La figure 8 montre une autre variante du carter de la faucheuse représentée par la figure 2. La partie horizontale de ce carter est divisée en deux portions. Une portion centrale de fixation 81 est prévue pour être solidarisée au châssis de la faucheuse. Elle porte des éléments de fixation à ce châssis 82, et comporte en son centre une ouverture circulaire 83 qui est destinée à permettre le passage du mécanisme de transmission pour permettre l'entraînement du disque.

Une portion périphérique 84 de la partie horizontale du carter est reliée au bord de cette portion centrale, de façon à être mobile en rotation dans un plan horizontal par rapport à la portion centrale 81. Cette portion périphérique supporte l'élément de front 85. La rotation de la portion périphérique 84 par rapport à la portion centrale 81, qui est représentée par la flèche R, entraîne donc une modification de l'angle β formé, dans un plan horizontal, entre l'élément de front 85 et la direction d'avancement de la faucheuse, qui est représentée par la flèche D.

L'angle β est ainsi réglable et peut être modifié par l'utilisateur pour s'adapter au mieux aux caractéristiques des végétaux coupés, et notamment à leur densité et à la vitesse d'avancement de l'équipement. Des vis permettent de verrouiller la position choisie.

### Élément avant réglable en hauteur

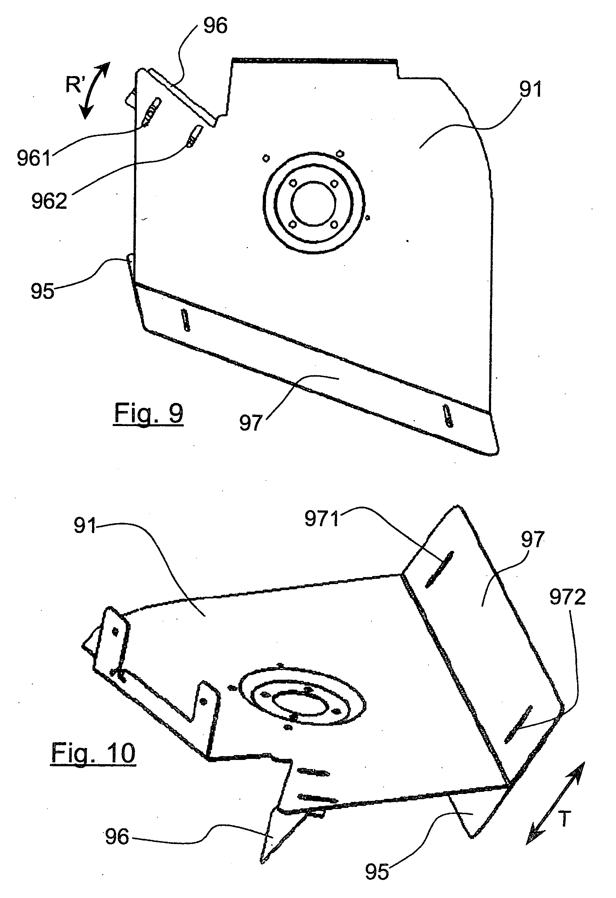

Les figures 9 et 10 montrent un autre mode de réalisation d'un carter adaptable sur la faucheuse représentée par la figure 2. Ce carter comporte, de la même façon que le carter représenté sur les figures 2 à 6, une partie horizontale 91 prévue pour s'adapter à la faucheuse.

Cette partie horizontale porte sur son bord avant un support d'élément de front 97, qui est orienté dans la même direction que l'élément de front. L'élément de front 95 est monté contre ce support d'élément de front et assemblé à celui-ci par deux vis qui traversent le support 97 par deux lumières 971 et 972.

La position de l'élément de front 95 par rapport au carter, et plus précisément sa hauteur par rapport au sol, peut ainsi être réglée et verrouillée par l'intermédiaire de ces vis, suivant la direction indiquée par la flèche T. L'utilisateur peut ainsi adapter la hauteur de l'élément de front en fonction, par exemple, de la hauteur, de la densité et du type des végétaux à couper.

### Elément latéral d'andainage réglable

Le carter représenté sur les figures 9 et 10 est équipé d'un élément latéral d'andainage 96. Cet élément est destiné à permettre l'évacuation des végétations basses, dont la hauteur est proche de la hauteur du carter par rapport au sol. Contrairement aux végétations plus hautes, ces végétations basses passent sous le carter au moment de leur coupe, sans pour autant être broyées, en raison de leur petite taille.

La position de l'élément latéral d'andainage 96 par rapport au carter peut également être réglée suivant la direction indiquée par la flèche R' et verrouillée par l'intermédiaire de vis passant dans des lumières 961 et 962 ménagées dans le carter. L'utilisateur peut ainsi adapter sa position en fonction, par exemple, de la hauteur, de la densité et du type des végétaux à couper.

### Carter à deux éléments de front

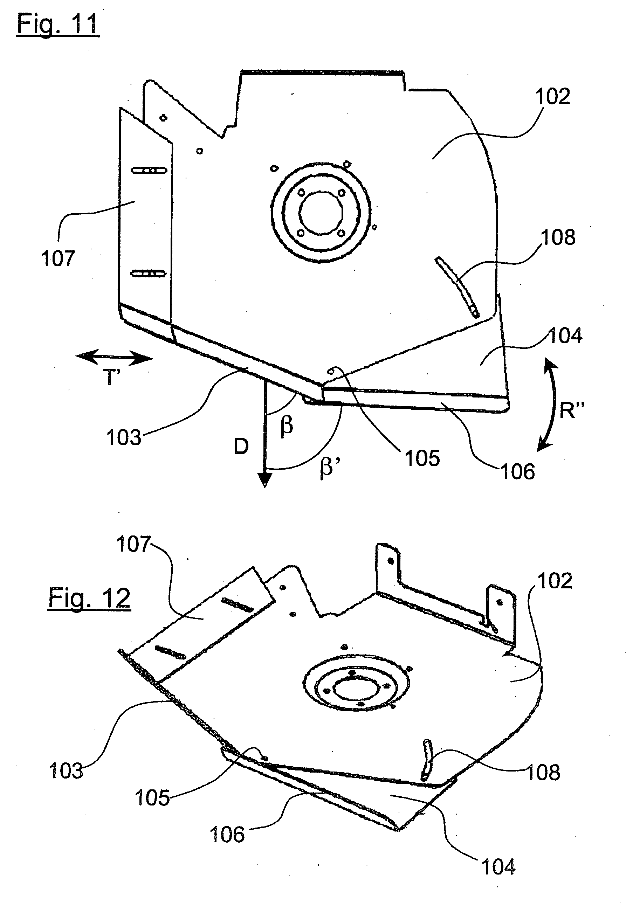

Les figures 11 et 12 montrent un autre mode de réalisation d'un carter adaptable sur la faucheuse représentée par la figure 2. La partie horizontale 102 de ce carter porte un premier élément de front 103, semblable à celui du premier mode de réalisation présenté, qui s'étend sur environ la moitié de la largeur du carter. Ce premier élément de front 103 est orienté, dans un plan horizontal, selon un angle β par rapport à la direction d'avancement de la faucheuse, qui est représentée par la flèche D.

Une portion pivotante 104 du carter est montée sur la partie horizontale 102 en rotation autour d'un axe 105, dans un plan horizontal, comme l'indique la flèche R". Sa position angulaire par rapport à la partie horizontale 102 peut être verrouillée grâce à une vis traversant la partie horizontale 102 par une lumière en arc de cercle 108.

La portion pivotante 104 porte un second élément de front 106, qui peut ainsi être orientée selon un angle β' qui peut être différent de l'angle β du premier élément de front 103. Ce réglage angulaire de la portion pivotante 104 permet d'adapter au mieux le carter en fonction de la densité, de la hauteur et du type des végétaux à couper ainsi qu'en fonction de la vitesse d'avancement de la machine. Les différentes positions utilisables pour la portion pivotante 104 orientent la seconde tôle de front 106 selon un angle β' compris entre 40° et 110° avec la direction d'avancement D.

Une portion latérale 107 est également fixée sur un bord latéral de la partie horizontale 102 et peut être déplacée perpendiculairement à la direction d'avancement, comme l'indique la flèche T', ou dans la direction formée par l'élément de front. Cette portion latérale 107 peut être fixée sur la partie horizontale 102 de façon à élargir plus ou moins le carter. Elle permet ainsi de réaliser l'andain plus ou moins loin du bord du carter, suivant la densité de la végétation, et également de limiter les projections suivant le type de terrain (cailloux ou autres).

Il pourrait également être possible, pour effectuer une coupe plus large, d'accoupler deux ensembles de fauchage selon l'invention comprenant chacun un disque rotatif pouvant tourner dans des sens différents.

## Revendications

1. Equipement mobile de fauchage de végétaux, comportant au moins un ensemble de coupe rotatif et un carter (2) monté au-dessus dudit ensemble de coupe rotatif, ledit carter (2) présentant un bord avant orienté de façon à être en contact avec les végétaux, à l'avant dudit équipement,
**caractérisé en ce que** ledit bord avant définit, dans un plan horizontal, un angle β, compris entre 40° et 80°, avec la direction d'avancement dudit équipement, de façon à être asymétrique par rapport à ladite direction d'avancement.

2. Equipement mobile de fauchage de végétaux selon la revendication 1, **caractérisé en ce que** ledit bord avant se prolonge par au moins un élément de front (7, 44, 85) s'étendant sensiblement vers le haut, destiné à être au contact avec les végétaux à l'avant dudit équipement.

3. Equipement mobile de fauchage de végétaux selon la revendication 2, **caractérisé en ce que** ledit élément de front (44) comporte une portion de forme sensiblement plane et inclinée sensiblement vers la direction d'avancement dudit dispositif de façon à former un angle α compris entre 100° et 170° avec l'horizontale.

4. Equipement mobile de fauchage de végétaux selon l'une quelconque des revendications 2 et 3, **caractérisé en ce que** ledit élément de front (7) comporte une portion présentant une section en arc de cercle, au voisinage dudit bord.

5. Equipement mobile de fauchage de végétaux selon l'une quelconque des revendications 2 à 4, **caractérisé en ce que** ledit élément de front (95) est mobile en translation par rapport audit carter (2), de façon à pouvoir prendre au moins deux positions d'utilisation.

6. Equipement mobile de fauchage de végétaux selon l'une quelconque des revendications 2 à 5, **caractérisé en ce que** ledit carter (2) porte un élément de front principal (103) et au moins un élément de front secondaire (106), au moins un desdits éléments de front secondaires (106) s'étendant le long du bord avant d'une portion dudit carter (2) mobile dans un plan sensiblement horizontal.

7. Equipement mobile de fauchage de végétaux selon l'une quelconque des revendications 1 à 6, **caractérisé en ce que** ledit carter (2) comporte au moins une portion latérale (96) mobile entre au moins deux positions.

8. Equipement mobile de fauchage de végétaux selon l'une quelconque des revendications 1 à 7, **caractérisé en ce qu'**un élément de protection de lame (27) est solidarisé à au moins un des bords latéraux dudit carter (2).

9. Equipement mobile de fauchage de végétaux selon l'une quelconque des revendications 1 à 8, **caractérisé en ce que** ledit carter (2) comprend au moins une partie mobile en rotation (104) par rapport audit équipement de coupe, de façon à pouvoir prendre au moins deux positions angulaires dans un plan sensiblement horizontal.

10. Carter d'équipement mobile de fauchage de végétaux à ensemble de coupe rotatif, destiné à être monté au-dessus dudit ensemble de coupe rotatif, et présentant un bord avant orienté de façon à être en contact avec les végétaux, à l'avant dudit équipement,
**caractérisé en ce que** ledit bord avant définit, dans un plan horizontal, un angle β, compris entre 40° et 80°, avec la direction d'avancement dudit équipement, de façon à être asymétrique par rapport à ladite direction d'avancement.

## Claims

1. Mobile equipment for cutting plants, comprising at least one rotary cutting assembly and a housing (2) which is mounted above the rotary cutting assembly, the housing (2) having a front edge which is orientated so as to be in contact with the plants, at the front of the equipment,
**characterised in that** the front edge defines, in a horizontal plane, an angle β of between 40° and 80° with the advance direction of the equipment so as to be asymmetrical relative to the advance direction.

2. Mobile equipment for cutting plants according to claim 1, **characterised in that** the front edge is lengthened with at least one front element (7, 44, 85) which extends substantially upwards and which is intended to be in contact with the plants at the front of the equipment.

3. Mobile equipment for cutting plants according to claim 2, **characterised in that** the front element (44) comprises a portion having a substantially planar shape which is inclined substantially in the advance direction of the device in order to form an angle α of between 100° and 170° with the horizontal.

4. Mobile equipment for cutting plants according to either claim 2 or claim 3, **characterised in that** the front element (7) comprises a portion which has a cross-section in the form of an arc of a circle, in the region of the edge.

5. Mobile equipment for cutting plants according to any one of claims 2 to 4, **characterised in that** the front element (95) can be moved in translation relative to the housing (2), in order to be able to assume at least two positions for use.

6. Mobile equipment for cutting plants according to any one of claims 2 to 5, **characterised in that** the housing (2) carries a main front element (103) and at least one secondary front element (106),
at least one of the secondary front elements (106) extending along the front edge of a portion of the housing (2) which can be moved in a substantially horizontal plane.

7. Mobile equipment for cutting plants according to any one of claims 1 to 6, **characterised in that** the housing (2) comprises at least one lateral portion (96) which can be moved between at least two positions.

8. Mobile equipment for cutting plants according to any one of claims 1 to 7, **characterised in that** a blade protection element (27) is fixedly joined to at least one of the lateral edges of the housing (2).

9. Mobile equipment for cutting plants according to any one of claims 1 to 8, **characterised in that** the housing (2) comprises at least one component (104) which can be moved in rotation relative to the cutting equipment so as to be able to assume at least two angular positions in a substantially horizontal plane.

10. Housing for mobile equipment for cutting plants having a rotary cutting assembly, which is intended to be mounted above the rotary cutting assembly and which has a front edge which is orientated so as to be in contact with the plants, at the front of the equipment,
**characterised in that** the front edge defines, in a horizontal plane, an angle β of between 40° and 80° with the advance direction of the equipment, so as to be asymmetrical relative to the advance direction.

## Patentansprüche

1. Mobile Ausrüstung zum Schneiden von Pflanzen, die mindestens eine sich drehende Schneidegruppe und ein Gehäuse (2) umfasst, das oberhalb der besagten sich drehenden Schneidegruppe angebracht ist, wobei das besagte Gehäuse (2) einen vorderen Rand aufweist, der so orientiert ist, dass er die Pflanzen am vorderen Teil der besagten Ausrüstung berührt,
**dadurch gekennzeichnet, dass** der besagte vordere Rand in einer horizontalen Ebene einen mit der Vorlaufrichtung der besagten Ausrüstung zwischen 40° und 80° liegenden Winkel β bildet, so dass er im Verhältnis zur besagten Vorlaufrichtung unsymmetrisch ist.

2. Mobile Ausrüstung zum Schneiden von Pflanzen nach Anspruch 1, **dadurch gekennzeichnet, dass** der besagte Rand durch mindestens ein Frontelement (7, 44, 85) verlängert wird, das sich in etwa nach oben erstreckt und die Pflanzen am vorderen Teil der besagten Ausrüstung berührt.

3. Mobile Ausrüstung zum Schneiden von Pflanzen nach Anspruch 2, **dadurch gekennzeichnet, dass** der besagte Frontelement (44) einen in etwa ebenen und in etwa in die Fortbewegungsrichtung der besagten Ausrüstung derart geneigten Teil aufweist, dass er einen mit der Horizontalen zwischen 100° und 170° liegenden Winkel α bildet.

4. Mobile Ausrüstung zum Schneiden von Pflanzen nach einem der Ansprüche 2 oder 3, **dadurch gekennzeichnet, dass** das besagte Frontelement (7) einen Teil umfasst, der in der Nähe des besagten Randes einen Abschnitt aufweist, der einen Kreisbogen bildet.

5. Mobile Ausrüstung zum Schneiden von Pflanzen nach einem der Ansprüche 2 bis 4, **dadurch gekennzeichnet, dass** das besagte Frontelement (95) sich gegenüber dem besagten Gehäuse (2) so translatorisch bewegbar ist, dass es mindestens zwei Verwendungspositionen einnehmen kann.

6. Mobile Ausrüstung zum Schneiden von Pflanzen nach einem der Ansprüche 2 bis 5, **dadurch gekennzeichnet, dass** das besagte Gehäuse (2) ein Hauptfrontelement (103) und mindestens ein Sekundärfrontelement (106) trägt, wobei mindestens eines dieser besagten sekundären Frontelemente (106) sich entlang dem Rand eines Teiles des besagten Gehäuses (2) erstreckt, welches in einer in etwa horizontalen Ebene beweglich ist.

7. Mobile Ausrüstung zum Schneiden von Pflanzen nach einem der Ansprüche 1 bis 6, **dadurch gekennzeichnet, dass** das besagte Gehäuse (2) mindestens einen seitlichen Teil (96) aufweist, der zwischen mindestens zwei Positionen beweglich ist.

8. Mobile Ausrüstung zum Schneiden von Pflanzen nach einem der Ansprüche 1 bis 7, **dadurch gekennzeichnet, dass** ein Klingenschutzelement (27) an mindestens einem der Seitenränder des besagten Gehäuses (2) angebracht ist.

9. Mobile Ausrüstung zum Schneiden von Pflanzen nach einem der Ansprüche 1 bis 8, **dadurch gekennzeichnet, dass** das besagte Gehäuse (2) mindestens einen gegenüber der Schneidegruppe derart drehbaren Teil (104) aufweist, dass er mindestens zwei Winkelpositionen in einer in etwa horizontalen Ebene einnehmen kann.

10. Gehäuse für eine mobile Ausrüstung zum Schneiden von Pflanzen mit einer sich drehenden Schneidegruppe, das oberhalb der besagten sich drehenden Schneidegruppe angebracht werden soll und einen vorderen Rand aufweist, der so orientiert ist, dass er die Pflanzen am vorderen Teil der besagten Ausrüstung berührt,
**dadurch gekennzeichnet, dass** der besagte vordere Rand in einer horizontalen Ebene einen mit der Vorlaufrichtung der besagten Ausrüstung zwischen 40° und 80° liegenden Winkel β bildet, so dass er im Verhältnis zur besagten Vorlaufrichtung unsymmetrisch ist.
